(19) **Europäisches Patentamt**
**European Patent Office**
**Office européen des brevets**

(11) **EP 2 300 664 B1**

(12) **EUROPÄISCHE PATENTSCHRIFT**

(45) Veröffentlichungstag und Bekanntmachung des Hinweises auf die Patenterteilung:
**27.11.2013 Patentblatt 2013/48**

(21) Anmeldenummer: **09772426.4**

(22) Anmeldetag: **30.06.2009**

(51) Int Cl.:
*D21H 17/69* (2006.01)    *D21H 17/67* (2006.01)
*C09C 1/02* (2006.01)    *D21H 17/00* (2006.01)
*D21H 17/36* (2006.01)    *D21H 17/37* (2006.01)
*D21H 17/45* (2006.01)    *D21H 17/68* (2006.01)

(86) Internationale Anmeldenummer:
**PCT/EP2009/058160**

(87) Internationale Veröffentlichungsnummer:
**WO 2010/000726 (07.01.2010 Gazette 2010/01)**

(54) **WÄSSRIGE ANSCHLÄMMUNGEN VON FEINTEILIGEN FÜLLSTOFFEN, VERFAHREN ZU IHRER HERSTELLUNG UND IHRE VERWENDUNG ZUR HERSTELLUNG FÜLLSTOFFHALTIGER PAPIERE**

AQUEOUS SUSPENSIONS OF FINE-PARTICULATE FILLERS, METHOD FOR THE MANUFACTURE THEREOF AND USE THEREOF FOR THE MANUFACTURE OF FLUID-CONTAINING PAPERS

SUSPENSIONS AQUEUSES DE FINES MATIÈRES DE CHARGE, LEUR PROCÉDÉ DE PRODUCTION ET LEUR UTILISATION POUR FABRIQUER DES PAPIERS CONTENANT DES MATIÈRES DE CHARGE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **03.07.2008 EP 08159619**

(43) Veröffentlichungstag der Anmeldung:
**30.03.2011 Patentblatt 2011/13**

(73) Patentinhaber: **BASF SE**
**67056 Ludwigshafen (DE)**

(72) Erfinder:
• **SCHMIDT-THÜMMES, Jürgen**
**67141 Neuhofen (DE)**
• **ESSER, Anton**
**67117 Limburgerhof (DE)**
• **NIEBERLE, Jörg**
**67157 Wachenheim (DE)**

(56) Entgegenhaltungen:
**WO-A-03/074786    WO-A-03/087472**
**WO-A-2006/086710    WO-A-2009/004080**
**GB-A- 1 505 641    GB-A- 2 085 492**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft wässrige Anschlämmungen von feinteiligen Füllstoffen, die zumindest teilweise mit Polymerisaten überzogen sind, Verfahren zu ihrer Herstellung und ihre Verwendung als Zusatz zum Papierstoff bei der Herstellung von füllstoffhaltigem Papier, füllstoffhaltigem Karton und füllstoffhaltiger Pappe mit hoher Trockenfestigkeit.

Bei der Herstellung füllstoffhaltiger Papiere wird die Füllstoffslurry zu der Fasersuspension zugegeben, bevor diese zum Former der Papiermaschine weitergeleitet wird. Ein Retentionsmittel oder ein Retentionsmittelsystem wird in der Regel zu der Füllstoff/Faserstoffsuspension zugesetzt, um soviel wie möglich Füllstoff im Papierblatt zu retenieren. Die Zugabe des Füllstoffs zum Papier gibt dem Papiermacher die Möglichkeit, zahlreiche Verbesserungen der Blatteigenschaften zu erreichen. Dazu gehören Eigenschaften wie die Opazität , Weiße, Haptik und Bedruckbarkeit.

Wenn darüber hinaus der Füllstoff billiger ist als der Faserstoff, kann die Zugabe oder vermehrte Zugabe von Füllstoff zu einer Reduzierung des Faserstoffanteils und damit zu einer Reduzierung der Herstellkosten des Papiers führen. Füllstoffhaltige Papiere bzw. Papiere mit besonders hohem Füllstoffgehalt lassen sich leichter trocken als nicht füllstoffhaltige Papiere bzw. als Papiere mit geringerem Füllstoffgehalt. Als Folge daraus kann die Papiermaschine schneller und mit niedrigerem Dampfverbrauch betrieben werden, was sowohl die Produktivität erhöht als auch die Kosten senkt.

Jedoch bringt die Füllstoffzugabe zur Fasersuspension auch Nachteile mit sich, die nur teilweise durch die Zugabe weiterer Papierhilfsmittel kompensiert werden können. Für ein gegebenes Flächengewicht gibt es Grenzen bezüglich der einsetzbaren Füllstoffmenge. Die Festigkeitseigenschaften des Papiers sind normalerweise die wichtigsten Parameter, die die Füllstoffmenge im Papier limitieren. Auch andere Faktoren, wie die Füllstoffretention, die Entwässerung der Papierstoffsuspension sowie ein eventuell erhöhter Chemikalienbedarf bei Retention und Leimung können hier eine Rolle spielen.

Der Verlust von Festigkeitseigenschaften von Papieren kann in manchen Fällen ganz oder teilweise durch den Einsatz von Trocken- und Nassverfestigern kompensiert werden. Eine gängige Vorgehensweise ist dabei die Zugabe von kationischer Stärke als Trockenverfestiger in den Papierstoff. Ebenso werden synthetische Trocken- und Nassverfestiger z.B. auf der Basis kationischer oder anionischer Polyacrylamide eingesetzt. Die Zugabemenge und die verfestigende Wirkung sind jedoch in den meisten Fällen begrenzt. Im gleichen Maße ist auch die kompensierende Wirkung im Bezug auf den Festigkeitsverlust durch Füllstofferhöhung und damit auch die überhaupt realisierbare  Füllstoffzunahme begrenzt. Darüber hinaus werden nicht alle Festigkeitseigenschaften in gleichem Maße und in manchen Fällen überhaupt nur unzureichend durch den Einsatz von Trockenverfestigern erhöht. Ein wichtiges Beispiel dafür ist die Weiterreisarbeit, die durch den Einsatz von Stärke oder synthetischen Trockenverfestigern im Vergleich zu anderen Festigkeitsparametern nur geringfügig beeinflusst wird. Die Erhöhung des Füllstoffgehaltes im Papier hat dagegen in der Regel einen sehr stark negativen Einfluss auf die Weiterreisarbeit.

Weitere wichtige Eigenschaften sind die Dicke sowie die Steifigkeit des Papiers. Die Erhöhung des Füllstoffgehaltes führt bei gleichem Flächengewicht zu einer Zunahme der Papierdichte und einer Abnahme der Dicke des Papierblattes. Letzteres führt zu einer erheblichen Abnahme der Papiersteifigkeit. Diese Abnahme der Papiersteifigkeit kann in vielen Fällen nicht allein durch den Einsatz von Trockenverfestigern ausgeglichen werden. Häufig sind zusätzliche Maßnahmen wie etwa die Reduzierung des mechanischen Druckes in der Pressenpartie in den Glättwerken, in Kalandern oder in der Trockenpartie der Papiermaschine notwendig. Letzteres kompensiert den Dickeverlust durch Füllstofferhöhung ganz oder teilweise.

Aus der DE-B-25 16 097 ist bekannt, dass man wässrige Suspensionen von anorganischen Teilchen, die ein positives Zetapotential aufweisen, mit einem anionischen Latex eines Harzes mischt, wobei das Gleichgewicht der negativen und positiven Ladungen der Teilchen des anorganischen Stoffes in der Suspension und des Harzes in dem Latex beim Vermischen so eingestellt wird, dass im Wesentlichen alle Harzteilchen an die Oberfläche der Teilchen des anorganischen Stoffes gebunden werden und die so erhaltenen beschichteten Teilchen ein Zetapotential von im Wesentlichen 0 aufweisen. Die Behandlung der anorganischen Teilchen mit einem Latex setzt jedoch voraus, dass die anorganischen Teilchen mit einem kationischen Mittel, wie kationischer Stärke, vorbehandelt werden, damit sie ein positives Zetapotential haben. Die wässrigen Suspensionen werden bei der Herstellung von füllstoffhaltigem Papier dem Papierstoff zugesetzt.

Aus der EP-B-0 573 458 ist ein Verfahren zur Herstellung von wässrigen Aufschlämmungen von feinteiligen Füllstoffen, die zumindest teilweise mit Polymerisaten überzogen sind, für die Herstellung füllstoffhaltiger Papiere bekannt. Bei diesem Verfahren gibt man zunächst zu einer wässrigen Aufschlämmung von Füllstoffen einen kationischen Verfestiger für Papier und danach einen nichtionischen und/oder anionischen Verfestiger für Papier oder auch ein nichtionisches oder anionisches Leimungsmittel für Papier. Die kationischen Einsatzstoffe werden jedoch immer in einer solchen Menge eingesetzt, dass die feinteiligen Füllstoffe eine kationische Ladung tragen.

Aus der DE-A-198 21 089 ist ein anderes Verfahren zur Herstellung von wässrigen Anschlämmungen von feinteiligen Füllstoffen bekannt, die zumindest teilweise mit Polymerisaten  überzogen sind. Bei diesem Verfahren behandelt man eine wässrige Anschlämmung von Füllstoffen in Abwesenheit von kationischen Verfestigern für Papier mit mindestens einem Polymerleimungsmittel in Form einer wässrigen Dispersion. Solche Dispersionen enthalten jedoch immer polymere Emulgatoren, z.B. abgebaute Stärken oder synthetische Polymere.

Aus der unveröffentlichten europäischen Anmeldung mit dem Aktenzeichen 07111863.2 ist ein Verfahren zur Behandlung von wässrigen Anschlämmungen von feinteiligen Füllstoffen bekannt, wobei die Behandlung durch Erwärmung einer wässrigen Anschlämmung mindestens eines feinteiligen Füllstoffs und anschließende Zugabe einer wässrigen Dispersion eines Latices erfolgt Dadurch werden Papiere mit einem hohen Füllstoffgehalt hergestellt, die sich ebenfalls durch hohe Trockenfestigkeit auszeichnen. Nachteilig an diesem Verfahren ist, dass die Temperaturerwärmung der wässrigen Anschlämmung von feinteiligen Füllstoffen in der Praxis aufgrund der schlechten Handhabung kaum durchführbar ist.

In WO-A-03/074786 werden wässrige Anschlämmungen von feinteiligen Füllstoffen offenbart, die zumindest teilweise mit Polymerisaten überzogen sind. Bei diesen Polymerisaten handelt es sich um Bindemittel für Papierstreichfarben, deren Glasübergangstemperatur im Bereich von -40 bis +50 °C liegt und vorzugsweise unterhalb von 6 °C liegt. Das in den Beispielen verwendete Bindemittel weist eine Glasübergangstemperatur von 5 °C auf. Die Behandlung der wässrigen Anschlämmungen von feinteiligen Füllstoffen mit Bindemitteln erfolgt bei Raumtemperatur.

Der Erfindung lag die Aufgabe zugrunde, weitere wässrige Anschlämmungen von feinteiligen Füllstoffen zur Verfügung zu stellen, die bei der Papierherstellung gegenüber den bekannten Anschlämmungen Papiere mit einer verbesserten Reißlänge und Bedruckbarkeit ergeben. Darüber hinaus sollen die nach dem erfindungsgemäßen Verfahren hergestellten Papiere einen hohen Füllstoffgehalt und hohe Trockenfestigkeit aufweisen.

Die Aufgabe wird erfindungsgemäß gelöst mit wässrigen Anschlämmungen von feinteiligen Füllstoffen, die zumindest teilweise mit anionischen Latices überzogen sind, wobei die Anschlämmungen erhältlich sind durch Behandeln von wässrigen Anschlämmungen feinteiliger Füllstoffe mit mindestens einem anionischen Latex mit einer Glasübergangstemperatur von -5 bis -50 °C, wobei die anionischen Latices aus 2-15 Gew.-% Styrol, 2 - 15 Gew.-% Acrylnitril, 75 - 95 Gew.-% $C_1$-$C_4$-Alkylacrylat und 0 - 5 Gew.-% Acrylsäure bestehen.

Die erfindungsgemäßen wässrigen Anschlämmungen enthalten beispielsweise 1 bis 70 Gew.-%, vorzugsweise 5 bis 50 Gew.-%, besonders bevorzugt 10 bis 40 Gew.-%, mindestens eines feinteiligen Füllstoffs. Die Menge an Latex beträgt beispielsweise 0,01 bis 10 Gew.%, vorzugsweise 0,1 bis 5 Gew.-%, besonders bevorzugt 0,2 bis 3 Gew.-%, bezogen auf den Füllstoff.

Gegenstand der Erfindung ist außerdem ein Verfahren zur Herstellung der wässrigen Anschlämmungen, wobei man zu einer wässrigen Anschlämmung mindestens eines feinteiligen Füllstoffs 0,01 bis 10 Gew.-% mindestens eines anionischen Latices, bezogen auf Füllstoff, zusetzt oder die wässrige Anschlämmung mindestens eines feinteiligen Füllstoffs in eine wässrige Dispersion eines anionischen Latices einträgt und die Bestandteile jeweils mischt.

Ein weiterer Gegenstand der Erfindung ist die Verwendung der oben beschriebenen wässrigen Anschlämmungen als Zusatz zum Papierstoff bei der Herstellung von füllstoffhaltigem Papier, füllstoffhaltigem Karton oder füllstoffhaltiger Pappe mit hoher Trockenfestigkeit durch Entwässern des Papierstoffs.

Unter dem Begriff Latex im Sinne der vorliegenden Erfindung werden wasserunlösliche Homo- und Copolymerisate verstanden, die vorzugsweise in Form vom Dispersionen oder Emulsionen eingesetzt werden.

Erfindungsgemäß werden anionischen Latices eingesetzt, deren Glasübergangstemperatur (gemessen mittels DSC) im Bereich von -5 bis -50 °C liegt. Bevorzugt werden anionische Latices mit einer Glasübergangstemperatur von -10 bis -40 °C und besonders bevorzugt von -10 bis -30 °C in den erfindungsgemäßen wässrigen Anschlämmungen feinteiliger Füllstoffe eingesetzt.

Die Glasübergangstemperatur $T_g$ ist dem Fachmann allgemein bekannt. Damit ist der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Die Glasübergangstemperatur wird nach dem DSC-Verfahren ermittelt (Differential Scanning Calorimetry, 20 K/min, midpoint-Messung, DIN 53765).

Nach Fox (T. G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z. B. in Ullmann's Encyclopedia of Industrial Chemistry, Bd. 5, Vol. A21, Seite 169, VCH Weinheim, 1992, aufgeführt. Weitere Quellen für Glasübergangstemperaturen von Homopolymerisaten bilden z. B. J. Brandrup, E. H. Immergut, Polymer Handbook, 1st Ed., J. Wiley, New York, 1966. 2nd Ed., J. Wiley, New York, 1975, und 3rd Ed., J. Wiley, New York, 1989.

Der Latex besteht vorzugsweise zu mindestens 40 Gew.-%, bevorzugt zu mindestens 60 Gew.-%, besonders bevorzugt zu mindestens 80 Gew.-% aus sogenannten Hauptmonomeren (a).

Die Hauptmonomeren (a) sind ausgewählt aus $C_1$-$C_4$-Alkylacrylaten, Vinylaromaten mit bis zu 20 C-Atomen, ethylenisch ungesättigten Nitrilen oder Mischungen dieser Monomeren.

Zu nennen sind z. B. Acrylsäurealkylester mit einem $C_1$-$C_4$-Alkylrest, wie Methylacrylat, n-Butylacrylat, Isobutylacrylat, Ethylacrylat.

Insbesondere sind auch Mischungen der Acrylsäurealkylester geeignet.

Bevorzugte Hauptmonomere (a) sind $C_1$-$C_4$-Alkyiacrylate und Mischungen der Alkylacrylate mit Styrol (zusammenfassend auch als Polyacrylat-Latex bezeichnet).

Darüber hinaus kann der anionische Latex weitere Monomere (c) enthalten, z. B. Monomere mit Carbonsäuregruppen. Genannt sei Acrylsäure. Der Gehalt an ethytenisch ungesättigten Säuren im Latex ist im Allgemeinen kleiner 10 Gew.-%. Der Anteil an diesen Monomeren (c) beträgt beispielsweise mindestens 1 Gew.-%, bevorzugt mindestens 2 Gew.-% und besonders bevorzugt mindestens 3 Gew.-%. Die Säuregruppen des Latices können gegebenenfalls vor der späteren Anwendung zumindest teilweise neutralisiert sein. Vorzugsweise werden mindestens 30 mol-%, besonders bevorzugt 50 - 100 mol-% der Säuregruppen neutralisiert. Als Base eignen sich flüchtig Basen wie Ammoniak oder nicht-flüchtige Basen wie Alkalihydroxide, insbesondere Natronlauge.

Bei der Zusammensetzung der anionischen Latices ist es entscheidend, dass die Glasübergangstemperatur (gemessen mittels DSC) der Latices im Bereich von -5 bis-50 °C, bevorzugt im Bereich von -10 bis -40 °C und besonders bevorzugt im Bereich von -10 bis -30 °C liegt. Dem Fachmann ist mit Hilfe der zuvor genannten Literatur bekannt, wie durch die Auswahl der Monomere anionische Latices mit der entsprechenden Glasübergangstemperatur erhalten werden.

Besonders bevorzugt sind wässrige Dispersionen von anionischen Latices aus

(1) Styrol und/oder Acrylnitril,
(2) Acrylsäureestern von $C_1$- bis $C_4$-Alkoholen, und gegebenenfalls
(3) Acrylsäure.

Beispielsweise enthalten derartige besonders bevorzugte Polyacrylat-Latices 2-15 Gew.% Styrol, 2 - 15 Gew.-% Acrylnitril, 75 - 95 Gew.-% $C_1$-$C_4$-Alkylacrylate, bevorzugt $C_4$-Acrylate wie n-Butylacrylat, Isobutylacrylat und/oder tert. Butylacrylat, und 0 - 5 Gew.-% Acrylsäure.

Die Herstellung der Latices erfolgt in der Regel durch Emulsionspolymerisation, es handelt sich daher um ein Emulsionspolymerisat. Die Herstellung wässriger Polymerisatdispersionen nach dem Verfahren der radikalischen Emulsionspolymerisation ist an sich bekannt (vgl. Houben-Weyl, Methoden der organischen Chemie, Band XIV, Makromolekulare Stoffe, loc. cit., Seiten 133ff).

Bei der Emulsionspolymerisation zur Herstellung der Latices werden ionische und/oder nicht-ionische Emulgatoren und/oder Schutzkolloide bzw. Stabilisatoren als grenzflächenaktive Verbindungen verwendet. Die grenzflächenaktive Substanz wird üblicherweise in Mengen von 0,1 bis 10 Gew.-%, insbesondere von 0.2 bis 3 Gew.% bezogen auf die zu polymerisierenden Monomeren verwendet.

Gebräuchliche Emulgatoren sind z. B. Ammonium- oder Alkalimetallsalze höherer Fettalkoholsulfate, wie Nan-Laurylsulfat, Fettalkoholphosphate, ethoxylierte $C_8$- bis $C_{10}$-Alkylphenole mit einem Ethoxylierungsgrad von 3 bis 30 sowie ethoxylierte **$C_8$-** bis $C_{25}$-Fettalkohole mit einem Ethoxylierungsgrad von 5 bis 50. Denkbar sind auch Gemische aus nichtionischen und ionischen Emulgatoren. Ferner geeignet sind phosphatoder sulfatgruppenhaltige, ethoxylierte und/oder propoxylierte Alkylphenole und/oder Fettalkohole. Weitere geeignete Emulgatoren sind in Houben-Weyl, Methoden der organischen Chemie, Band XIV, Makromolekulare Stoffe, Georg Thieme Verlag, Stuttgart, 1961, Seiten 192 bis 209 aufgeführt.

Wasserlösliche Initiatoren für die Emulsionspolymerisation zur Herstellung der Latices sind z. B. Ammonium- und Alkalimetallsalze der Peroxidischwefelsäure, z. B. Natriumperoxodisulfat, Wasserstoffperoxid oder organische Peroxide, z. B. tert-Butylhydroperoxid. Geeignet sind auch sogenannte Reduktions-Oxidations(Red-Ox)-Initiator Systeme.

Die Menge der Initiatoren beträgt im Allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Emulsionspolymerisation können Regler eingesetzt werden, z. B. in Mengen von 0 bis 3 Gew.-Teile, bezogen auf 100 Gew.-Teile der zu polymerisierenden Monomeren, durch die die Molmasse verringert wird. Geeignet sind z. B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan oder Regler ohne Thiolgruppe, insbesondere z. B. Terpinolen.

Die Emulsionspolymerisation zur Herstellung der Latices erfolgt in der Regel bei 30 bis 130 °C, vorzugsweise bei 50 bis 100 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z. B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d. h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Im Anschluss an die (Co)Polymerisation können die im Latex enthaltenen Säuregruppen noch zumindest teilweise neutralisiert werden. Dies kann beispielsweise erfolgen mit Oxiden, Hydroxiden, Carbonaten oder Hydrogencarbonaten von Alkalimetallen oder Erdalkalimetallen, bevorzugt mit Hydroxiden, denen ein beliebiges Gegenion oder mehrere assoziiert sein kann, z.B. $Li^+$, $Na^+$, $K^+$, $Cs^+$, $Mg^{2+}$, $Ca^{2+}$ oder $Ba^{2+}$. Weiterhin zur Neutralisierung geeignet sind Ammoniak oder Amine. Bevorzugt sind wässrige Ammoniumhydroxid-, Natriumhydroxid- oder Kaliumhydroxidlösungen.

Bei der Emulsionspolymerisation werden wässrige Dispersionen des Latices in der Regel mit Feststoffgehalten von 15 bis 75 Gew.-%, bevorzugt von 40 bis 75 Gew.-% erhalten.

Die Partikelgröße der Latices liegt vorzugsweise im Bereich von 10 bis 1000 nm, besonders bevorzugt im Bereich von 50 bis 300 nm (gemessen mit einem Malvern® Autosizer 2 C).

Die wässrigen Dispersionen mindestens eines Latices werden erfindungsgemäß zur Behandlung von feinteiligen Füllstoffen eingesetzt. Als Füllstoffe kommen alle üblicherweise in der Papierindustrie einsetzbaren Pigmente aus anorganischem Material in Betracht, z.B. Calciumcarbonat, das in Form von gemahlenem Kalk (GCC), Kreide, Marmor oder präzipitiertem Calciumcarbonat (PCC) eingesetzt werden kann, Talkum, Kaolin, Bentonit, Satinweiß, Calciumsulfat, Bariumsulfat oder Titandioxid. Man kann auch Mischungen aus zwei oder mehr Pigmenten einsetzen, bevorzugt wird jedoch ein Pigment eingesetzt. Der mittlere Teilchendurchmesser liegt beispielsweise im Bereich von 0,5 bis 30 μm, vorzugsweise zwischen 1 und 10 μm.

Ein anderer Gegenstand der vorliegenden Erfindung ist ein Verfahren zur Herstellung der wässrigen Anschlämmung von feinteiligen Füllstoffen.

Die Füllstoffe werden beispielsweise durch Einbringen in Wasser zu einer wässrigen Anschlämmung verarbeitet. Präzipitiertes Calciumcarbonat wird üblicherweise in Abwesenheit von Dispergiermitteln in Wasser aufgeschlämmt. Um wässrige Anschlämmungen der übrigen Füllstoffe herzustellen, verwendet man in der Regel ein anionisches Dispergiermittel, z.B. Polyacrylsäuren mit einer Molmasse $M_w$ von beispielsweise 1 000 bis 40 000. Falls man ein anionisches Dispergiermittel verwendet, so setzt man davon beispielsweise 0,01 bis 0,5 Gew.-%, vorzugsweise 0,2 bis 0,3 Gew.-% zur Herstellung der wässrigen Füllstoffanschlämmungen ein. Die in Gegenwart von anionischen Dispergiermitteln in Wasser dispergierten feinteiligen Füllstoffe sind anionisch. Die wässrigen Anschlämmungen enthalten besonders bevorzugt 10 bis 40 Gew.-% mindestens eines Füllstoffs.

Um die erfindungsgemäßen wässrigen Anschlämmungen von feinteiligen Füllstoffen herzustellen, behandelt man wässrige Anschlämmungen von gegebenenfalls anionisch dispergierten feinteiligen Füllstoffen mit mindestens einem anionischen Latex. Beispielsweise kann man zu einer 1 bis 70 Gew.-% mindestens eines feinteiligen Füllstoffs enthaltenden wässrigen Anschlämmung 0,01 bis 10 Gew.-%, bezogen auf den Füllstoff, eines anionischen Latices zusetzen oder eine wässrige Anschlämmung eines feinteiligen Füllstoffs in eine wässrige Dispersion eines anionischen Latices eintragen und die Komponenten jeweils mischen. Ebenso ist es möglich, dass der feinteilige Füllstoff fest in eine wässrige Dispersion eines anionischen Latices eingebracht wird. Das Behandeln der wässrigen Anschlämmungen von feinteiligen Füllstoffen mit den anionischen Latices kann kontinuierlich oder diskontinuierlich durchgeführt werden. Beim Zusammenbringen der feinteiligen Füllstoffe mit anionischen Latices werden die Füllstoffe zumindest teilweise mit anionischen Latices überzogen bzw. imprägniert. Das Mischen der Komponenten erfolgt beispielsweise in einem Scherfeld. Meistens ist es ausreichend, wenn man die Komponenten nach dem Zusammenbringen rührt oder sie in einem Scherfeld eines Ultraturraxgerätes behandelt. Das Zusammenbringen und Mischen der Bestandteile der wässrigen Anschlämmungen kann beispielsweise in dem Temperaturbereich von 0°C bis 95°C, vorzugsweise 10 bis 70°C erfolgen. Meistens mischt man die Komponenten bei der jeweiligen Raumtemperatur bis zu einer Temperatur von 40°C. Der pH-Wert der mit anionischen Latices behandelten wässrigen Anschlämmungen von Füllstoffen beträgt beispielsweise 5 bis 11, vorzugsweise 6 bis 9, wobei der pH-Wert von Calciumcarbonat enthaltenden Anschlämmungen vorzugsweise mehr als 6,5 beträgt.

Besonders bevorzugt werden wässrige Anschlämmungen von präzipitiertem Calciumcarbonat, das frei von Dispergiermitteln ist, und von gemahlenem Calciumcarbonat hergestellt, das durch Mahlen von stückigem Calciumcarbonat oder Marmor in Gegenwart von anionischen polymeren Dispergiermitteln wie Polyacrylsäuren mit Molmassen von 1 000 bis 15 000 erhältlich ist.

Ein weiterer Gegenstand der Erfindung ist die Verwendung der wässrigen Anschlämmungen als Zusatz zum Papierstoff bei der Herstellung von füllstoffhaltigem Papier, füllstoffhaltigem Karton oder füllstoffhaltiger Pappe durch Entwässern des Papierstoffs.

Die erfindungsgemäß mit einem anionischen Latex behandelten wässrigen Pigmentanschlämmungen können zur Herstellung sämtlicher füllstoffhaltiger Papierqualitäten eingesetzt werden, z.B. Zeitungsdruck, SC-Papier (supercalandriertes Papier), holzfreie oder holzhaltige Schreib- und Druckpapiere. Zur Herstellung solcher Papiere verwendet man beispielsweise als Hauptrohstoffkomponenten Holzschliff, thermomechanischen Stoff (TMP), chemo-thermomechanischem Stoff (CTMP), Druckschliff (PGW) sowie Sulfit- und Sulfatzellstoff. Durch die Verwendung der erfindungsgemäßen wässrigen Anschlämmungen kann der Füllstoffgehalt des Papiers bei nahezu unveränderten Festigkeitseigenschaften deutlich erhöht werden. Solche Papiere weisen Festigkeitseigenschaften auf, die mit denen herkömmlicher Papiere mit niedrigem Feststoffgehalt vergleichbar sind.

Die erfindungsgemäßen wässrigen Anschlämmungen feinteiliger Füllstoffe werden bei der Papierherstellung dem Faserstoff beigemischt, um so den Gesamtpapierstoff zu bilden. Neben den behandelten Füllstoffen und Faserstoffen kann der Gesamtstoff noch andere konventionelle Papieradditive enthalten. Dazu gehören beispielsweise Leimungsmittel wie Alkylketendimere (AKD), Alkenylbernsteinsäureanhydride (ASA), Harzleim, Nassfestmittel, kationische oder anionische Retentionsmittel auf Basis synthetischer Polymere. Als Retentionsmittel kommen beispielsweise anionische Mikropartikel (kolloidale Kieselsäure, Bentonit), anionische Polyacrylamide, kationische Polyacrylamide, kationische Stärke, kationisches Polyethylenimin oder kationisches Polyvinylamin in Frage. Darüber hinaus sind beliebige Kombinationen davon denkbar, beispielsweise duale Systeme, die aus einem kationischen Polymer mit einem anionischen Mikropartikel oder einem anionischen Polymer mit einem kationischen Mikropartikel bestehen. Um eine hohe Füllstoffretention zu erreichen, empfiehlt sich die Zugabe von derartigen Retentionsmitteln, die beispielsweise zum Dickstoff aber auch zu dem Dünnstoff zugegeben werden können.

Die Erfindung wird anhand der folgenden, nicht einschränkenden Beispiele näher erläutert.

Beispiele

Die Prozentangaben in den Beispielen bedeuten Gewichtsprozent, sofern aus dem Zusammenhang nichts anderes hervorgeht.

Polymer 1

In einem mit Ankerrührer ausgestatteten 4l-Planschliffgefäß wurden 411,7 g vollentsalztes Wasser, 14,5 g einer Polystyrolsaat (Feststoffgehalt 33 %, mittlere Teilchengröße 29 nm) und 1,4 g einer 45 Gew.-% igen Lösung von Dodecylphenoxybenzoldisulfonsäure-Natriumsalz (Dowfax® 2A1, Dow Chemicals ) sowie 15,4 g einer 7 Gew.%igen Lösung von Natriumperoxidisulfat vorgelegt. Über ein geregeltes, außenliegendes Ölbad wurde das Reaktionsgefäß unter Rühren auf 93 °C aufgeheizt. Nach Erreichen der Temperatur wurde eine zuvor hergestellte Monomeremulsion bestehend aus 534,2 g vollentsalztem Wasser, 22,4 g einer 15 Gew.-%igen Lösung von Natriumlaurylsulfat (Disponil® SDS 15, Cognis), 8 g einer 45 Gew.-% igen Lösung von Dodecylphenoxybenzoldisulfonsäure-Natriumsalz (Dowfax® 2A1, Dow Chemicals), 12 g einer 10 Gew.-% igen Lösung von Natriumhydroxyd, 36 g Acrylsäure, 108 g Styrol, 948 g n-Butylacrylat und 108 g Acrylnitril gleichmäßig innerhalb von 2 Stunden zudosiert. Parallel dazu wurden 49,7 g einer 7 Gew.-%igen Lösung von Natriumperoxidisulfat zudosiert. Der Ansatz wurde unter Konstanthaltung der Temperatur für weitere 45 Minuten gerührt. Anschließend wurden 93,6 g einer 10 Gew.-%igen Lösung von Natriumhydroxid zugegeben, und der Reaktionsinhalt auf 60 °C abgekühlt. Anschließend wurden parallel zwei Zuläufe bestehend aus a) 24 g einer 10 Gew.-%igen Lösung von tert-Butylhydroperoxid und b) 33 g einer 13 Gew.-%igen Lösung enthaltend das Additionsprodukt aus 2,67 g Natriumdisulfit und 1,62 g Aceton innerhalb von 30 Minuten zudosiert. Der Reaktorinhalt wurde auf Raumtemperatur abgekühlt.

Erhalten wurde eine praktisch koagulatfreie Polymerdispersion mit einem Feststoffgehalt von 50,2 Gew.-%, einem pH-Wert von 7,3 und einer durch dynamische Lichtstreuung (Malvern HPPS) gemessenen Teilchengröße von 184 nm. Das Polymer wies eine über DSC (Mettler DSC 820) gemessene Glasübergangstemperatur von -11 °C auf.

Polymer 2

Polymer 2 wurde analog Polymer 1 hergestellt, jedoch wurde bei der Herstellung der Monomeremulsion eine Monomermischung aus 36 g Acrylsäure, 60 g Styrol, 1044 g n-Butylacrylat und 60 g Acrylnitril eingesetzt.

Erhalten wurde eine praktisch koagulatfreie Polymerdispersion mit einem Feststoffgehalt von 50,2 Gew.-%, einem pH-Wert von 7,5 und einer durch dynamische Lichtstreuung (Malvern HPPS) gemessenen Teilchengröße von 172 nm. Das Polymer wies eine über DSC gemessene Glasübergangstemperatur von -25 °C auf.

Beispiel 1

Zu 150 g einer 20 Gew.-%igen wässrigen Anschlämmung von präzipitiertem Calciumcarbonat (PCC) wurden unter leichtem Rühren bei Raumtemperatur 1,8 g einer 50 Gew.-%igen Dispersion eines anionischen Latex (Polymer 1) gemischt. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

Beispiel 2

Zu 150 g einer 20 Gew.-%igen wässrigen Anschlämmung von präzipitiertem Calciumcarbonat (PCC) wurden unter leichtem Rühren bei Raumtemperatur 1,8 g einer 50 Gew.-%igen Dispersion eines anionischen Latex (Polymer 2) gemischt. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

Vergleichsbeispiel (VB) 1 (nach WO-A-03/074786)

Zu 150 g einer 20 Gew.-%igen wässrigen Anschlämmung von präzipitiertem Calciumcarbonat (PCC) wurden unter leichtem Rühren bei Raumtemperatur 1,8 g einer 50 Gew.-%igen Dispersion eines Bindemittels für Papierstreichmassen mit einer Glasübergangstemperatur von 5 °C (Acronal® S 504, BASF SE) gemischt. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

Beispiel 3

Zu 150 g einer 30 Gew.-%igen wässrigen Anschlämmung eines handelsüblichen Kaolin-Clays wurden unter leichtem Rühren bei Raumtemperatur 2,7 g einer 50 Gew.-%igen Dispersion eines anionischen Latex (Polymer 1) gemischt. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

Beispiel 4

Zu 150 g einer 30 Gew.-%igen wässrigen Anschlämmung eines handelsüblichen Kaolin-Clays wurden unter leichtem Rühren bei Raumtemperatur 2,7 g einer 50 Gew.-%igen Dispersion eines anionischen Latex (Polymer 2) gemischt. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

Beispiel 5

2,7 g einer 50 Gew.-%igen Dispersion eines anionischen Latex (Polymer 2) wurden mit 150 ml Wasser verdünnt. Der stark verdünnten Dispersion wurde anschließend bei Raumtemperatur ein handelsüblicher Kaolin-Clay in Pulverform zugesetzt. Die Feststoffkonzentration der Anschlämmung betrug nach der Zugabe des Kaolin-Clays 30 %. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

Vergleichsbeispiel (VB) 2 (nach WO-A-03/074786)

Zu 150 g einer 30 Gew.-%igen wässrigen Anschlämmung eines handelsüblichen Kaolin-Clays wurden unter leichtem Rühren bei Raumtemperatur 2,7 g einer 50 Gew.-%igen Dispersion eines Bindemittels für Papierstreichmassen mit einer Glasübergangstemperatur von 5 °C (Acronal® S 504, BASF SE) gemischt. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

Herstellung von füllstoffhaltigem Papier

Papiere vom Typ A

Beispiele 6 - 11

Vergleichsbeispiele 3 - 8

Eine Mischung aus gebleichtem Birkensulfat und gebleichtem Kiefernsulfit wurde im Verhältnis von 70/30 bei einer Feststoffkonzentration von 4 % im Laborpulper stippenfrei aufgeschlagen, bis ein Mahlgrad von 30 - 35 erreicht wurde. Dem aufgeschlagenen Stoff wurde anschließend ein optischer Aufheller (Blankophor® PSG, Bayer AG) sowie eine kationische Stärke (HiCat® 5163 A) zugegeben. Der Aufschluss der kationischen Stärke erfolgte als 10 Gew.-%ige Stärkeslurry in einem Jet-Kocher bei 130 °C und 1 Minute Verweilzeit. Die Dosiermenge des optischen Aufhellers betrug 0,5 Gew.-% Handelsware, bezogen auf den Trockengehalt der Papierstoffsuspension. Die Dosiermenge der kationischen Stärke betrug 0,5 Gew.-% Stärke, bezogen auf den Trockengehalt der Papierstoffsuspension. Der pH-Wert des Stoffs lag dabei im Bereich zwischen 7 und 8. Der gemahlene Stoff wurde anschließend durch Zugabe von Wasser auf eine Feststoffkonzentration von 0,35 Gew.-% verdünnt.

Um das Verhalten der oben beschriebenen wässrigen Füllstoff-Slurries bei der Herstellung von füllstoffhaltigem Papier zu ermitteln, legte man jeweils 500 ml der Papierstoffsuspension vor und dosiert jeweils in diese Pulpe die gemäß den Beispielen behandelten Slurries sowie ein kationisches Polyacrylamid als Retentionsmittel (Polymin® KE 440, BASF SE). Die Dosiermenge des Retentionsmittels betrug in allen Fällen jeweils 0,01 Gew.-% Polymer, bezogen auf den Trockengehalt der Papierstoffsuspension.

Anschließend wurden Blätter mit den oben beschriebenen vorbehandelten Füllstoffen gebildet (Beispiele 6 - 11 und Vergleichsbeispiele 3 - 5). Die dazu eingesetzte Füllstoffmenge wurde so angepasst, dass die Füllstoffgehalte ca. 20 %, 30 % bzw. 40 % betrugen. Im Falle der vorbehandelten Füllstoffe ist die eingesetzte Slurrymenge, die eingesetzt werden muss, um einen bestimmten Zielwert zu erreichen, stets geringer als im Falle der unbehandelten Füllstoffe.

Zu dem vorbehandelten Füllstofftyp wurden außerdem Vergleichsbeispiele mit unbehandeltem Füllstoff durchgeführt (Vergleichsbeispiele 6 - 8). Dazu wurde zunächst in Vorversuchen die Menge an unbehandelter Füllstoffslurry ermittelt, die nötig ist, um einen Füllstoffgehalt von ca. 20 %, 30 % bzw. 40 % einzustellen. Anschließend wurden Blätter mit den unbehandelten Füllstoffen gebildet.

Die Papierblätter wurden jeweils auf einem Rapid-Köthen-Blattbildner nach ISO 5269/2 mit einem Blattgewicht von 70 g/m$^2$ gefertigt und anschließend 7 Minuten bei 90 °C getrocknet.

Papiere vom Typ B

Beispiele 12 - 20

Vergleichsbeispiele 9 - 14

Eine Mischung aus TMP (thermo-mechanical pulp) und Holzschliff wurde im Verhältnis von 70/30 bei einer Feststoffkonzentration von 4 % im Laborpulper stippenfrei aufgeschlagen, bis ein Mahlgrad von 35 erreicht wurde. Der pH-Wert des Stoffs lag dabei im Bereich zwischen 7 und 8. Der gemahlene Stoff wurde anschließend durch Zugabe von Wasser auf eine Feststoffkonzentration von 0,35 Gew.-% verdünnt.

Um das Verhalten der oben beschriebenen wässrigen Füllstoff-Slurries bei der Herstellung von füllstoffhaltigem Papier zu ermitteln, legte man jeweils 500 ml der Papierstoffsuspension vor und dosiert jeweils in diese Pulpe die gemäß den Beispielen behandelten Slurries sowie ein kationisches Polyacrylamid als Retentionsmittel (Polymin® KE 440, BASF SE). Die Dosiermenge des Retentionsmittels betrug in allen Fällen jeweils 0,01 Gew.-% Polymer, bezogen auf den Trockengehalt der Papierstoffsuspension.

Anschließend wurden Blätter mit den oben beschriebenen vorbehandelten Füllstoffen gebildet (Beispiele 12 - 20 sowie Vergleichsbeispiele 9 - 11). Die dazu eingesetzte Füllstoffmenge wurde so angepasst, dass die Füllstoffgehalte ca. 20 %, 30 % bzw. 40 % betrugen. Im Falle der vorbehandelten Füllstoffe ist die eingesetzte Slurrymenge, die eingesetzt werden muss, um einen bestimmten Zielwert zu erreichen, stets geringer als im Falle der unbehandelten Füllstoffe.

Zu dem vorbehandelten Füllstofftyp wurden außerdem Vergleichsbeispiele mit unbehandeltem Füllstoff durchgeführt (Vergleichsbeispiele 12 - 14). Dazu wurde zunächst in Vorversuchen die Menge an unbehandelter Füllstoffslurry ermittelt, die nötig ist, um einen Füllstoffgehalt von ca. 20 %, 30 % bzw. 40 % einzustellen. Anschließend wurden Blätter mit dem unbehandelten Füllstoff gebildet.

Die Papierblätter wurden jeweils auf einem Rapid-Köthen-Blattbildner nach ISO 5269/2 mit einem Blattgewicht von 80 g/m gefertigt, anschließend 7 Minuten bei 90 °C getrocknet und danach mit einem Liniendruck von 200 N/cm kalandriert.

Prüfung der Papierblätter vom Typ A

Nach einer Lagerzeit im Klimaraum bei konstant 23 °C und 50 % Luftfeuchtigkeit für 12 Stunden wurden die Trockenreißlänge der Blätter nach DIN 54540, die innere Festigkeit nach DIN 54516 und die Biegesteifigkeit nach DIN 53121 ermittelt. Die Ergebnisse sind in Tabelle 1 angegeben. Die Slurries entsprechend den Vergleichsbeispielen bzw. die Vergleichsbeispiele mit den daraus hergestellten Papierblättern sind mit dem Zusatz (VB) gekennzeichnet. Bei den anderen Beispielen handelt es sich um erfindungsgemäße Beispiele.

Prüfung der Papierblätter vom Typ B

Nach einer Lagerzeit im Klimaraum bei konstant 23 °C und 50 % Luftfeuchtigkeit für 12 Stunden wurden die Trockenreißlänge der Blätter nach DIN 54540 und die innere Festigkeit nach DIN 54516 ermittelt. Die Trockenrupffestigkeit der Papiere wurde mit dem IGT-Bedruckbarkeitsprüfer (ISO 3783) ermittelt. Die Ergebnisse sind in Tabelle 2 angegeben. Die Slurries entsprechend den Vergleichsbeispielen bzw. die Vergleichsbeispiele mit den daraus hergestellten Papierblättern sind mit dem Zusatz (VB) gekennzeichnet. Bei den anderen Beispielen handelt es sich um erfindungsgemäße Beispiele.

Tabelle 1 (Prüfung der Papierblätter vom Typ A)

| Beispiel bzw. Vergleichsbeispiel (VB) | Slurry nach Beispiel bzw. Vergleichsbeispiel (VB) | Füllstoffgehalt [%] | Trockenreißlänge [m] | Innere Festigkeit [N] | BiegeSteifigkeit [mN] |
|---|---|---|---|---|---|
| 6 | 1 | 20,3 | 5511 | 313 | 79,1 |
| 7 | 1 | 29,1 | 4616 | 247 | 60,3 |
| 8 | 1 | 39,7 | 4017 | 212 | 44,2 |
| 9 | 2 | 20,6 | 5612 | 333 | 76,4 |
| 10 | 2 | 29,9 | 4589 | 254 | 61,7 |
| 11 | 2 | 40,4 | 3987 | 223 | 45,9 |
| 3 (VB) | 1 (VB) | 20,8 | 4945 | 199 | 69,1 |
| 4 (VB) | 1 (VB) | 30,4 | 4217 | 154 | 52,1 |
| 5 (VB) | 1 (VB) | 39,2 | 3518 | 117 | 37,7 |
| 6 (VB) | PCC ohne Vorbehandlung | 20,2 | 4318 | 168 | 67,2 |
| 7 (VB) | PCC ohne Vorbehandlung | 30,9 | 3435 | 121 | 48,4 |
| 8 (VB) | PCC ohne Vorbehandlung | 39,7 | 2714 | 87 | 34,1 |

Tabelle 2 (Prüfung der Papierblätter vom Typ B

| Beispiel bzw. Vergleichsbeispiel (VB) | Slurry nach Beispiel bzw. Vergleichsbeispiel (VB) | Füllstoffgehalt [%] | Trockenreißlänge [m] | Innere Festigkeit [N] | IGT |
|---|---|---|---|---|---|
| 12 | 3 | 20,9 | 4956 | 367 | Sehr gut |
| 13 | 3 | 29,7 | 3448 | 288 | Sehr gut |

(fortgesetzt)

| Beispiel bzw. Vergleichsbeispiel (VB) | Slurry nach Beispiel bzw. Vergleichsbeispiel (VB) | Füllstoffgehalt [%] | Trockenreißlänge [m] | Innere Festigkeit [N] | IGT |
|---|---|---|---|---|---|
| 14 | 3 | 40,9 | 3066 | 234 | Gut |
| 15 | 4 | 19,3 | 5012 | 355 | Sehr gut |
| 16 | 4 | 31,2 | 3987 | 275 | Sehr gut |
| 17 | 4 | 40,3 | 2981 | 237 | Gut |
| 18 | 5 | 20,0 | 5212 | 389 | Sehr gut |
| 19 | 5 | 31,1 | 3871 | 321 | Sehr gut |
| 20 | 5 | 40,4 | 3233 | 265 | Sehr gut |
| 9 (VB) | 2 (VB) | 20,2 | 4432 | 312 | Sehr gut |
| 10 (VB) | 2 (V)B | 30,3 | 3389 | 234 | Gut |
| 11 (VB) | 2 (VB) | 40,3 | 2534 | 198 | Gut |
| 12 (VB) | Kaolin-Clay ohne Vorbehandlung | 21,1 | 3117 | 212 | Gut |
| 13 (VB) | Kaolin-Clay ohne Vorbehandlung | 29,8 | 2391 | 151 | Mäßig |
| 14 (VB) | Kaolin-Clay ohne Vorbehandlung | 40,3 | 1814 | 92 | Schlecht |

**Patentansprüche**

1. Wässrige Anschlämmungen von feinteiligen Füllstoffen, die zumindest teilweise mit anionischen Latices überzogen sind, **dadurch gekennzeichnet, dass** die Anschlämmungen erhältlich sind durch Behandeln von wässrigen Anschlämmungen feinteiliger Füllstoffe mit mindestens einem anionischen Latex mit einer Glasübergangstemperatur von -5 bis -50 °C, wobei die anionischen Latices aus 2 - 15 Gew.-% Styrol, 2 -15 Gew.% Acrylnitril, 75 - 95 Gew.-% $C_1$-$C_4$-Alkylacrylaten und 0 - 5 Gew.-% Acrylsäure bestehen.

2. Wässrige Anschlämmung nach Anspruch 1, **dadurch gekennzeichnet, dass** die Glasübergangstemperatur des anionischen Latices im Bereich von -10 bis -40 °C liegt.

3. Wässrige Anschlämmung nach Anspruch 1 oder 2. **dadurch gekennzeichnet, dass** die Glasübergangstemperatur des anionischen Latices im Bereich von -10 bis-30 °C liegt.

4. Wässrige Anschlämmung nach einem der vorstehenden Ansprüche, **dadurch gekennzeichnet, dass** sie 1 bis 70 Gew.-% mindestens eines feinteiligen Füllstoffs und 0,01 bis 10 Gew.-%, bezogen auf den Füllstoff, mindestens eines anionischen Latices enthalten.

5. Verfahren zur Herstellung einer wässrigen Anschlämmung nach einem der vorstehenden Ansprüche, **dadurch gekennzeichnet, dass** man zu einer wässrigen Anschlämmung mindestens eines feinteiligen Füllstoffs 0,01 bis 10 Gew.%, bezogen auf den Füllstoff, mindestens eines anionischen Latices zusetzt, oder die wässrige Anschlämmung eines feinteiligen Füllstoffs in eine wässrige Dispersion eines anionischen Latices einträgt und die Komponenten jeweils mischt, oder den feinteiligen Füllstoff fest in eine wässrige Dispersion eines anionischen Latices einbringt, wobei die anionischen Latices aus 2 -15 Gew.-% Styrol, 2 - 15 Gew.-% Acrylnitril, 75 - 95 Gew.-% $C_1$-$C_4$-Alkylacrylaten und 0 - 5 Gew.-% Acrylsäure bestehen.

6. Verwendung der wässrigen Anschlämmungen nach einem der Ansprüche 1 bis 5 als Zusatz zum Papierstoff bei der Herstellung von füllstofihaltigem Papier, füllstoffhaltigem Karton oder fültstoffhaltiger Pappe durch Entwässern des Papierstoffs.

**Claims**

1. An aqueous slurry of finely divided fillers which are at least partly covered by anionic latices, wherein the slurries are obtainable by treating aqueous slurries of finely divided fillers with at least one anionic latex with a glass transition temperature of -5 to -50°C, wherein the anionic latices consist of 2-15% by weight of styrene, 2-15% by weight of acrylonitrile, 75-95% by weight of $C_1$-$C_4$-alkyl acrylates and 0-5% by weight of acrylic acid.

2. The aqueous slurry according to claim 1, wherein the glass transition temperature of the anionic latex is in the range from -10 to -40°C.

3. The aqueous slurry according to claim 1 or 2, wherein the glass transition temperature of the anionic latex is in the range from -10 to -30°C.

4. The aqueous slurry according to any of the preceding claims, which comprises from 1 to 70% by weight of at least one finely divided filler and from 0.01 to 10% by weight, based on the filler, of at least one anionic latex.

5. A process for the preparation of an aqueous slurry according to any of the preceding claims, wherein from 0.01 to 10% by weight, based on the filler, of  at least one anionic latex is added to an aqueous slurry of at least one finely divided filler, or the aqueous slurry of a finely divided filler is introduced into an aqueous dispersion of an anionic latex and the components are in each case mixed, or the finely divided filler is introduced in solid form into an aqueous dispersion of an anionic latex, wherein the anionic latices consist of 2-15% by weight of styrene, 2-15% by weight of acrylonitrile, 75-95% by weight of $C_1$-$C_4$-alkyl acrylates and 0-5% by weight of acrylic acid.

6. The use of the aqueous slurries according to any of claims 1 to 5 as an additive to the paper stock in the production of filler-containing paper, filler-containing cardboard or filler-containing board by draining the paper stock.

**Revendications**

1. Suspensions aqueuses de charges finement divisées, qui sont revêtues au moins partiellement de latex anioniques, **caractérisées en ce que** les suspensions peuvent être obtenues par traitement de suspensions aqueuses de charges finement divisées avec au moins un latex anionique présentant une température de transition vitreuse de -5 à -50°C, les latex anioniques étant constitués par 2-15% en poids de styrène, 2-15% en poids d'acrylonitrile, 75-95% en poids d'acrylates de $C_1$-$C_4$-alkyle et 0-5% en poids d'acide acrylique.

2. Suspension aqueuse selon la revendication 1, **caractérisée en ce que** la température de transition vitreuse du latex anionique se situe dans la plage de - 10 à -40°C.

3. Suspension aqueuse selon la revendication 1 ou 2, **caractérisée en ce que** la température de transition vitreuse du latex anionique se situe dans la plage de - 10 à -30°C.

4. Suspension aqueuse selon l'une quelconque des revendications précédentes, **caractérisée en ce qu'**elle contient 1 à 70% en poids d'au moins une charge finement divisée et 0,01 à 10% en poids, par rapport à  la charge, d'au moins un latex anionique.

5. Procédé pour la préparation d'une suspension aqueuse selon l'une quelconque des revendications précédentes, **caractérisé en ce qu'**on ajoute, à une suspension aqueuse d'au moins une charge finement divisée, 0,01 à 10% en poids, par rapport à la charge, d'au moins un latex anionique, ou on introduit la suspension aqueuse d'une charge finement divisée dans une dispersion aqueuse d'un latex anionique et on mélange les composants, ou on introduit la charge finement divisée sous forme solide dans une dispersion aqueuse d'un latex anionique, les latex anioniques étant constitués par 2-15% en poids de styrène, 2-15% en poids d'acrylonitrile, 75-95% en poids d'acrylates de $C_1$-$C_4$-alkyle et 0-5% en poids d'acide acrylique.

6. Utilisation des suspensions aqueuses selon l'une quelconque des revendications 1 à 5 comme additif de la pâte à papier lors de la fabrication de papier contenant des charges, de carton contenant des charges ou de carton-pâte contenant des charges par déshydratation de la pâte à papier.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2516097 B
- EP 0573458 B
- DE 19821089 A
- EP 07111863 A
- WO 03074786 A

**In der Beschreibung aufgeführte Nicht-Patentliteratur**

- **G. KANIG.** *Kolloid-Zeitschrift & Zeitschrift für Polymere,* vol. 190, 1
- **T. G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Encyclopedia of Industrial Chemistry. VCH, 1992, vol. 5, 169
- **J. BRANDRUP ; E. H. IMMERGUT.** Polymer Handbook. J. Wiley, 1966
- POLYMER HANDBOOK. J. Wiley, 1975
- POLYMER HANDBOOK. J. Wiley, 1989
- Methoden der organischen Chemie. **HOUBEN-WEYL.** Makromolekulare Stoffe. Georg Thieme Verlag, 1961, vol. XIV, 192-209